# EUROPEAN PATENT SPECIFICATION

(11) **EP 4 109 604 B1**
(45) Date of publication and mention of the grant of the patent: **12.11.2025**
(21) Application number: 20920639.0
(22) Date of filing: 25.12.2020
(51) Int. Cl.: H01M 8/00, H01M 8/04, H01M 8/0432, H01M 8/04746, H01M 8/10, H01M 8/12, F24H 1/00, F24D 103/00, F24D 103/13

(54) **EXHAUST HEAT RECOVERY SYSTEM**
ABGASABWÄRMERÜCKGEWINNUNGSSYSTEM
SYSTÈME DE RÉCUPÉRATION DE CHALEUR D'ÉCHAPPEMENT

(30) Priority: 21.02.2020 JP 2020027706
(43) Date of publication of application: 28.12.2022
(73) Proprietor: Panasonic Intellectual Property Management Co., Ltd., Osaka-shi, Osaka 540-6207 (JP)
(72) Inventor: KANEKO, Yota, Osaka-shi, Osaka (JP); HORI, Shinichiro, Osaka-shi, Osaka (JP); TSUYUGUCHI, Kouhei, Osaka-shi, Osaka (JP)
(74) Representative: Grünecker Patent- und Rechtsanwälte PartG mbB
(86) International application number: PCT/JP2020/048903
(87) International publication number: WO 2021/166451

(56) References cited:
- WO-A1-2013/110396
- DE-A1- 4 434 831
- GB-A- 2 440 281
- JP-A- 2003 254 160
- JP-A- 2004 125 256
- JP-A- 2009 103 419
- JP-A- S6 291 764

## Description

### BACKGROUND

### 1. Technical Field

The present invention relates to an exhaust heat recovery system configured to recover exhaust heat generated from a device that generates exhaust heat, such as a power generator, and use the exhaust heat effectively.

### 2. Description of the Related Art

Patent Literature 1 discloses a fuel cell power generator including a fuel cell and a hot water storage tank, the fuel cell being configured to generate electrical energy and heat energy, based on an electrochemical reaction between a hydrogen-containing gas obtained by steam-reforming a hydrocarbon-based fuel and an oxidant gas, in which the fuel cell power generator is configured to conduct cogeneration operation for storing a part of the heat energy generated by the fuel cell as warm water in the hot water storage tank. Citation List

Patent Literature 1: Japanese Unexamined Patent Application Publication No. 2003-282105. WO 2013/110396 A1 relates to a method for operating a combined heat and power plant. DE 4434 831 A1 relates to a system for combined energy generation with a domestic power generation facility for power supply.

### SUMMARY

The present invention provides an exhaust heat recovery system configured to allow a power generator to continue power generation by switching to mono-generation operation even when a hot water storage tank becomes too full to store any more heat during cogeneration operation.

The exhaust heat recovery system according to the present invention includes: an exhaust heat generator; a cooling path; a cooling pump disposed in the cooling path; a first heat exchanger disposed in the cooling path; an intermediate path; a cooler; a second heat exchanger disposed in the intermediate path; a flow path switching unit disposed in the intermediate path and configured to switch between a main path and a branched path, the main path being configured to allow a heat medium to flow therethrough while causing the heat medium to bypass the cooler, the branched path being configured to allow the heat medium to flow therethrough via the cooler; a hot water supply path; a switching determination unit configured to determine whether to switch the flow path switching unit between the main path and the branched path, based on a first temperature that is a temperature of the heat medium flowing through the intermediate path or a second temperature that is a temperature of supplied hot water flowing through the hot water supply path; a hot water supply pump disposed in the hot water supply path; and a controller. The cooling path is configured to allow the flow of cooling water for recovering heat generated by the exhaust heat generator through heat exchange.

The cooling pump is configured to control the flow rate of the cooling water flowing through the cooling path. The intermediate path is configured to allow the flow of the heat medium subjected to heat exchange with the cooling water by the first heat exchanger. The cooler is configured to cool the heat medium flowing through the intermediate path. The hot water supply path is configured to allow the flow of the supplied hot water subjected to heat exchange with the heat medium by the second heat exchanger. The hot water supply pump is configured to be controlled by the controller, based on the first temperature, to adjust the flow rate of the supplied hot water flowing through the hot water supply path.

The controller is configured to, when the first temperature becomes higher than a first predetermined temperature or the second temperature becomes higher than a second predetermined temperature, cause the hot water supply pump to stop, cause the flow path switching unit to switch to the branched path, and cause the cooler to operate, and configured to cause the hot water supply pump to operate in a predetermined cycle during the stop of the hot water supply pump is stopped, and, when, during the operation of the hot water supply pump in the predetermined cycle, the first temperature varies by a predetermined value or more or the second temperature becomes lower than a third predetermined temperature, cause the hot water supply pump to operate, cause the flow path switching unit to switch to the main path, and cause the cooler to stop.

The exhaust heat recovery system according to the present invention is capable of switching to mono-generation operation in which the hot water supply pump is sopped, the flow path switching unit is switched to the branched path, and the cooler is operated, when the first temperature becomes higher than the first predetermined temperature or the second temperature becomes higher than the second predetermined temperature. Furthermore, the exhaust heat recovery system is capable of switching to cogeneration operation in which, the operation of the hot water supply pump is performed in the predetermined cycle during the stop of the hot water supply pump, and when, during the operation of the operation of the hot water supply pump in the predetermined cycle, the first temperature varies by the
predetermined value or more or the second temperature becomes lower than the third predetermined temperature, the hot water supply pump is operated, the flow path switching unit is switched to the main path, and the cooler is stopped. In other words, the mono-generation operation and the cogeneration operation are automatically switched by the controller, based on the first temperature and the second temperature. Thus, there is provided the exhaust heat recovery system configured to allow a power generator to continue power generation by switching to the mono-generation operation even when the hot water storage tank becomes too full to store any more heat during the cogeneration operation.

### BRIEF DESCRIPTION OF THE DRAWINGS

FIG. 1 is a configuration diagram illustrating an example of an exhaust heat recovery system according to a first embodiment of the present invention.
FIG. 2 is a flow chart illustrating an example of operation of exhaust heat recovery systems according to the first embodiment and a second embodiment of the present invention.
FIG. 3 is a configuration diagram illustrating an example of the exhaust heat recovery system according to the second embodiment of the present invention.

### DETAILED DESCRIPTIONS

### (Underlying Knowledge Forming Basis of the Present Invention)

**In** common exhaust heat recovery systems including a power generator that generates exhaust heat, such as a fuel cell power generator, it is necessary to let cooling water or the like flow through the power generator and cool the power generator by the cooling water or the like for the purpose of maintaining the power generation performance of the power generator. Such power generator cannot continue power generation when the cooling using cooling water cannot be performed.

For example, in the case of cooling the power generator by using cooling water, the cooling water having flown through the power generator is heated through heat exchange with the power generator. In other words, the cooling water recovers exhaust heat of the power generator. Next, the heated cooling water exchanges heat with supplied hot water circulating through a hot water storage tank. Thus, the temperature of the cooling water decreases while the temperature of the supplied hot water increases. The supplied hot water having an increased temperature is stored as warm water in the hot water storage tank. Thus, the exhaust heat of the power generator is recovered and the warm water is stored in the hot water storage tank, whereby the exhaust heat of the power generator can be made use of to enhance energy conservation.

However, when the hot water storage tank becomes too full to store any more heat, exhaust heat of the power generator cannot be recovered and thereby warm water cannot be stored in the hot water storage tank. Thus, the temperature of the cooling water does not decrease, so that the power generator cannot be cooled. Hence, in the fuel cell power generator described in Patent Literature 1, when the hot water storage tank becomes too full to store any more heat, the fuel cell power generator cannot continue power generation, thereby causing the risk of losing benefits for users.

Therefore, the inventors earnestly studied an advantageous technology for continuing power generation even when the hot water storage tank became too full to store any more heat. As a result, the inventors found that, by making use of a first temperature that is the temperature of a heat medium flowing through an intermediate path and a second temperature that is the temperature of supplied hot water flowing through a hot water supply path, mono-generation operation and cogeneration operation can be switched automatically. Based on the novel findings, the inventors devised an exhaust heat recovery system according to the present disclosure.

The present invention provides the exhaust heat recovery system configured to allow a power generator to continue power generation by switching to mono-generation operation even when a hot water storage tank becomes too full to store any more heat during cogeneration operation.

Hereinafter, embodiments will be described in detail with reference to the drawings. However, descriptions that are more detailed than necessary may be omitted. For example, detailed descriptions on already well-known matters or overlapping descriptions on substantially the same configurations may be omitted.

The accompanying drawings and the following descriptions are provided to help those skilled in the art fully understand the present invention, and do not intend to thereby restrict the subject matter recited in the claims.

### (First Embodiment)

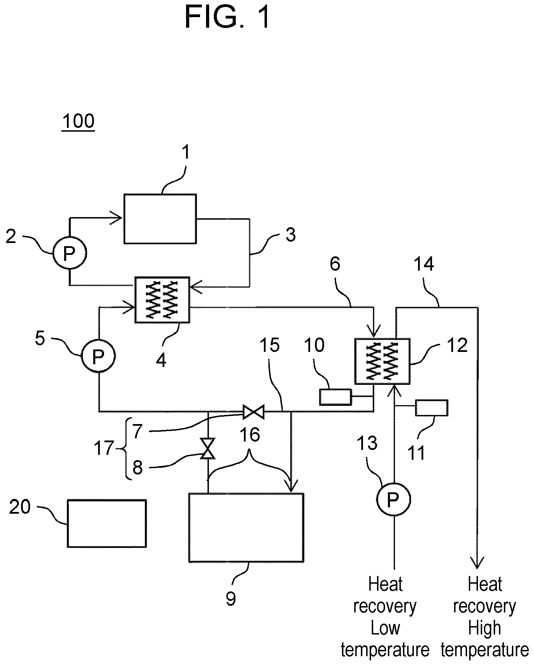

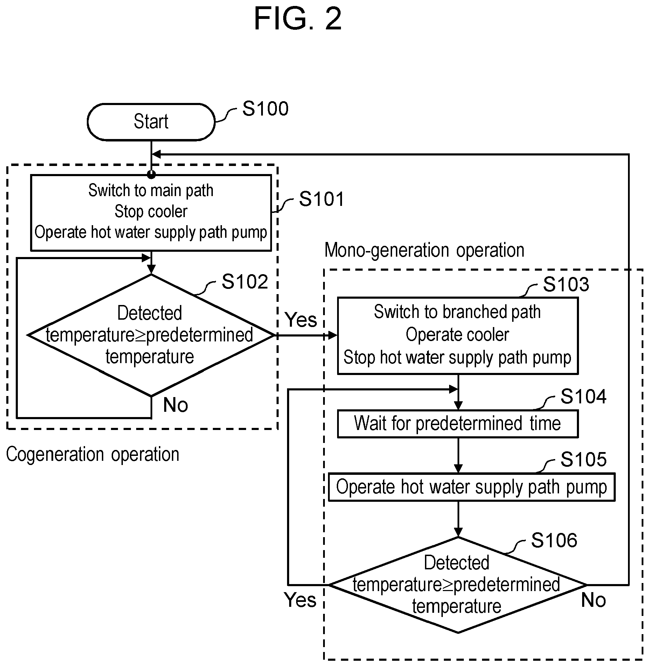

Hereinafter, a first embodiment will be described using FIG. 1 and FIG. 2. FIG. 1 is a configuration diagram illustrating exhaust heat recovery system 100 according to the first embodiment. FIG. 2 is a flow chart illustrating an example of operation of exhaust heat recovery system 100.

### [1-1. Configuration]

Exhaust heat recovery system 100 includes exhaust heat generator 1, cooling pump 2, cooling path 3, and first heat exchanger 4. Exhaust heat generator 1, cooling pump 2, and first heat exchanger 4 are disposed in cooling path 3.

Exhaust heat generator 1 is a device that generates exhaust heat when operated. Exhaust heat generator 1 is, for example, a polymer electrolyte fuel cell. Polymer electrolyte fuel cells generate electric power by using an oxidant gas and a hydrogen-containing gas. Note that exhaust heat generator 1 may be another type of fuel cell, for example, a solid oxide fuel cell, or may be a device that generates exhaust heat, other than a fuel cell.

Cooling path 3 is a path configured to allow the circulation of cooling water for cooling exhaust heat generator 1. Specifically, the cooling water circulating through cooling path 3 exchanges heat with exhaust heat generator 1 to recover the exhaust heat of exhaust heat generator 1, so that exhaust heat generator 1 is cooled. Cooling water in cooling path 3 circulates through cooling path 3 by operation of cooling pump 2. Note that cooling path 3 is also referred to as a primary path.

First heat exchanger 4 is configured to cause heat exchange between cooling water circulating through cooling path 3 and a heat medium circulating through intermediate path 6 described later.

Exhaust heat recovery system 100 further includes intermediate pump 5, intermediate path 6, first temperature sensor 10, and second heat exchanger 12. Intermediate pump 5, first temperature sensor 10, and second heat exchanger 12 are disposed in intermediate path 6.

Intermediate path 6 is a path configured to allow the circulation of the heat medium subjected to heat exchange with the cooling water circulating through cooling path 3 by first heat exchanger 4. The heat medium in intermediate path 6 circulates through intermediate path 6 by operation of intermediate pump 5. Note that intermediate path 6 is also referred to as a secondary path.

First temperature sensor 10 is a device configured to detect the temperature of the heat medium circulating through intermediate path 6. First temperature sensor 10 is, for example, a contact temperature sensor.

Intermediate path 6 includes main path 15, branched path 16, cooler 9, and flow path switching unit 17. Flow path switching unit 17 includes first two-way valve 7 disposed in main path 15 and second two-way valve 8 disposed in branched path 16. Branched path 16 is a path configured to allow the heat medium to circulate through intermediate path 6 via cooler 9 and second two-way valve 8. Main path 15 is a path configured to allow the heat medium to circulate through intermediate path 6 via first two-way valve 7 while causing the heat medium to bypass cooler 9, in other words, without allowing the heat medium to pass through cooler 9. Cooler 9 is, for example, a radiator configured to radiate heat by using a fan.

Second heat exchanger 12 is configured to cause heat exchange between the heat medium circulating through intermediate path 6 and supplied hot water circulating through hot water supply path 14 described later.

Exhaust heat recovery system 100 further includes hot water supply pump 13, hot water supply path 14, and second temperature sensor 11. Hot water supply pump 13 and second temperature sensor 11 are disposed in hot water supply path 14.

Hot water supply path 14 is a path configured to allow the circulation of the supplied hot water subjected to heat exchange with the heat medium circulating through intermediate path 6 by second heat exchanger 12. Supplied hot water in hot water supply path 14 circulates through hot water supply path 14 by operation of hot water supply pump 13. Note that hot water supply path 14 is also referred to as a tertiary path.

Second temperature sensor 11 is a device configured to detect the temperature of the supplied hot water circulating through hot water supply path 14. Second temperature sensor 11 is, for example, a contact temperature sensor.

Exhaust heat recovery system 100 further includes switching determination unit 20. Switching determination unit 20 is configured to determine whether to switch flow path switching unit 17, based on a temperature detected by first temperature sensor 10, namely the first temperature and a temperature detected by second temperature sensor 11, namely the second temperature.

### [1-2. Operation]

The operation of the exhaust heat recovery system configured as described above will be described below by using the flow chart of FIG. 2.

First, exhaust heat recovery system 100 starts the operation of exhaust heat generator 1 (S100).

Next, exhaust heat recovery system 100 switches the flow path from branched path 16 to main path 15 by using flow path switching unit 17 and controls the operation amount of hot water supply pump 13 so that a temperature detected by first temperature sensor 10, namely the first temperature reaches a predetermined temperature, for example, 50°C (S101). At this time, the operation of cooler 9 is stopped.

Next, exhaust heat recovery system 100 determines whether or not a temperature detected by second temperature sensor 11, namely the second temperature is higher than a predetermined temperature, for example, 40°C (S102). If exhaust heat recovery system 100 determines that the temperature detected by second temperature sensor 11, namely the second temperature is lower than the predetermined temperature, for example, 40°C (No at S102), S102 is performed again (the process returns to S102).

If exhaust heat recovery system 100 determines that the temperature detected by second temperature sensor 11, namely the second temperature is equal to or higher than the predetermined temperature, for example, 40°C (Yes at S102), switching determination unit 20 makes a determination to switch flow path switching unit 17 (S103). In other words, flow path switching unit 17 is switched from main path 15 to branched path 16. Specifically, first two-way valve 7 is closed while second two-way valve 8 is opened. At this time, operation of cooler 9 is started while operation of hot water supply pump 13 is stopped. This switching operation is also referred to as switching from cogeneration operation to mono-generation operation.

Next, after an elapse of a predetermined time, exhaust heat recovery system 100 operates hot water supply pump 13 in a predetermined cycle, for example, in a 60-minute cycle (S104, S105).

Next, exhaust heat recovery system 100 determines whether or not a temperature detected by second temperature sensor 11, namely the second temperature is higher than a predetermined temperature, for example, 35°C (S106). If exhaust heat recovery system 100 determines that the temperature detected by second temperature sensor 11, namely the second temperature is equal to or higher than the predetermined temperature, for example, 35°C (Yes at S106), the process moves to S104.

If exhaust heat recovery system 100 determines that the temperature detected by second temperature sensor 11, namely the second temperature is lower than the predetermined temperature, for example, 35°C (No at S106), switching determination unit 20 makes a determination to switch flow path switching unit 17, and the process moves to S101. In other words, flow path switching unit 17 is switched from branched path 16 to main path 15. Specifically, first two-way valve 7 is opened while second two-way valve 8 is closed. At this time, operation of cooler 9 is stopped while operation of hot water supply pump 13 is started. This switching operation is also referred to as switching from the mono-generation operation to the cogeneration operation.

Note that, in the present embodiment, the determination is made, based on the temperature detected by second temperature sensor 11, namely the second temperature. However, the determination may be made, based on the temperature detected by first temperature sensor 10, namely the first temperature. For example, if the first temperature varies by a predetermined value or more at S106, the process may move to S101.

### [1-3. Effects]

As described above, the exhaust heat recovery system according to the present embodiment includes: the exhaust heat generator; the cooling path; the cooling pump disposed in the cooling path; the first heat exchanger disposed in the cooling path; the intermediate path; the cooler; the second heat exchanger disposed in the intermediate path; the flow path switching unit disposed in the intermediate path and configured to switch between the main path configured to allow the heat medium to flow therethrough while causing the heat medium to bypass the cooler and the branched path configured to allow the heat medium to flow therethrough via the cooler; the hot water supply path; the switching determination unit configured to determine whether to switch the flow path switching unit between the main path and the branched path, based on a temperature of the heat medium flowing through the intermediate path, namely the first temperature or a temperature of supplied hot water flowing through the hot water supply path, namely the second temperature; the hot water supply pump disposed in the hot water supply path; and the controller. The cooling path is configured to allow the flow of the cooling water for recovering heat through heat exchange, the heat being generated by the exhaust heat generator.

The cooling pump is configured to control the flow rate of the cooling water flowing through the cooling path. The intermediate path is configured to allow the flow of the heat medium subjected to heat exchange with the cooling water by the first heat exchanger. The cooler is configured to cool the heat medium flowing through the intermediate path. The hot water supply path is configured to allow the flow of the supplied hot water subjected to heat exchange with the heat medium by the second heat exchanger. The hot water supply pump is configured to be controlled by the controller, based on the first temperature, to adjust the flow rate of the supplied hot water flowing through the hot water supply path.

The controller is configured to, when the first temperature becomes higher than a first predetermined temperature or a second temperature becomes higher than the second predetermined temperature, cause the hot water supply pump to stop, cause the flow path switching unit to switch to the branched path, and cause the cooler to operate, and configured to cause the hot water supply pump to operate in a predetermined cycle during the stop of the hot water supply pump is stopped, and, when, during the operation of the hot water supply pump in the predetermined cycle, the first temperature varies by a predetermined value or more or the second temperature becomes lower than the third predetermined temperature, cause the hot water supply pump to operate, cause the flow path switching unit to switch to the main path, and cause the cooler to stop.

With this configuration, even when the hot water storage tank becomes full during the cogeneration operation and thereby power generation cannot be continued, the cogeneration operation can be automatically switched to the mono-generation operation. Thus, even when the hot water storage tank becomes full during cogeneration operation and thereby power generation cannot be continued, the cogeneration operation is switched to the mono-generation operation, whereby power generation can be continued.

The exhaust heat recovery system according to the present embodiment may further include at least one of: the first temperature sensor disposed in the intermediate path and configured to detect the temperature of the heat medium flowing through the intermediate path, namely the first temperature; and the second temperature sensor disposed in the hot water supply path and configured to detect the temperature of the supplied hot water circulating through the hot water supply path, namely the second temperature.

With this configuration, the temperature of stored hot water can be detected by at least one of the first temperature sensor and the second temperature sensor, so that an error in the determination of switching from the cogeneration operation to the mono-generation operation is reduced. Thus, the duration of the cogeneration operation can be made longer by the reduced error, so that more amount of exhaust heat can be recovered.

In the present embodiment, the flow path switching unit may include the first two-way valve disposed in the main path.

With this configuration, switching between the main path and the branched path can be performed with a simpler configuration. Therefore, switching from the cogeneration operation to the mono-generation operation and switching from the mono-generation operation to the cogeneration operation can be more easily performed.

In the present embodiment, the flow path switching unit may further include the second two-way valve disposed in the branched path.

With this configuration, switching between the main path and the branched path can be performed with a simpler configuration. Furthermore, even when either the first two-way valve or the second two-way valve breaks down, for example, becomes stuck and unable to open, the performance on the prevention of freezing can be maintained, whereby the cooler and the branched path can be substantially prevented from being damaged due to freezing.

Furthermore, not according to the invention, the heat medium subjected to heat exchange by the first heat exchanger may be supplied to the second heat exchanger without branching.

With this configuration, heat radiation in a branched part can be substantially prevented. Therefore, the amount of heat recovery by the exhaust heat recovery system can be enhanced.

### (Second Embodiment)

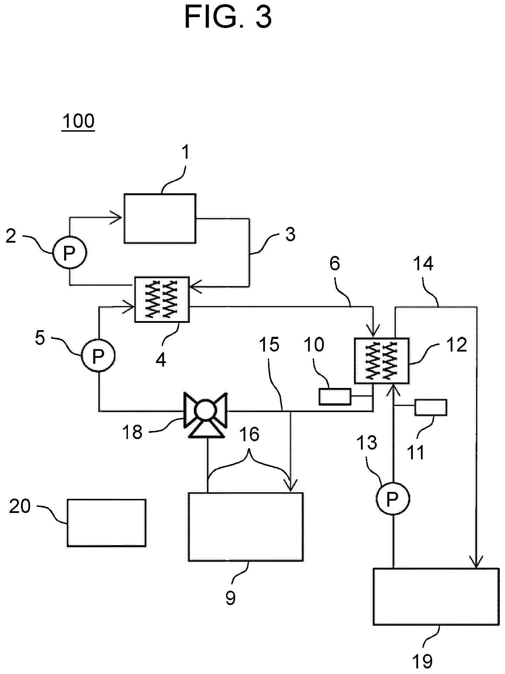

Hereinafter, a second embodiment will be described using FIG. 3. FIG. 3 is a configuration diagram illustrating an example of exhaust heat recovery system 100 according to the second embodiment of the present disclosure.

Hereinafter, descriptions of the second embodiment will be given only in terms of differences between the second embodiment and the first embodiment. Exhaust heat recovery system 100 according to the second embodiment includes three-way valve 18 in place of flow path switching unit 17 according to the first embodiment. Exhaust heat recovery system 100 according to the second embodiment further includes hot water storage tank 19. Other constitutions and operation according to the second embodiment are the same as those according to the first embodiment. Therefore, the same constituents and operation as those according to the first embodiment are given the same reference numerals, and the description thereof are omitted.

### [2-1. Configuration]

Exhaust heat recovery system 100 includes three-way valve 18 disposed in intermediate path 6. Three-way valve 18 is configured to switch between main path 15 and branched path 16. Branched path 16 is a path configured to allow a heat medium to circulate through intermediate path 6 via cooler 9 and three-way valve 18. Main path 15 is a path configured to allow the heat medium to circulate through intermediate path 6 via three-way valve 18 while causing the heat medium to bypass cooler 9, in other words, without allowing the heat medium to pass through cooler 9.

Exhaust heat recovery system 100 further includes hot water storage tank 19 disposed in hot water supply path 14. Hot water storage tank 19 is configured to store supplied hot water in hot water supply path 14.

Second temperature sensor 11 is a device configured to detect the temperature of supplied hot water circulating through hot water supply path 14. Second temperature sensor 11 is, for example, a contact temperature sensor. Note that second temperature sensor 11 may be disposed inside hot water storage tank 19.

Note that the above-described embodiments are merely for exemplifying the technology of the present invention, and therefore, the embodiments may be subjected to various modifications, substitutions, additions, omissions, or the likes within the scope of the claims.

### [2-2. Operation]

The operation of exhaust heat recovery system 100 according to the second embodiment configured as described above will be described below. As the flow chart of the operation, the flow chart illustrated in FIG. 2 can be utilized.

At S101, exhaust heat recovery system 100 switches the flow path from branched path 16 to main path 15 by using three-way valve 18, and controls the operation amount of hot water supply pump 13 so that a temperature detected by first temperature sensor 10, namely the first temperature reaches a predetermined temperature, for example, 50°C.

At S102, exhaust heat recovery system 100 determines whether or not a temperature detected by second temperature sensor 11, namely the second temperature is higher than a predetermined temperature, for example, 40°C. If exhaust heat recovery system 100 determines that the temperature detected by second temperature sensor 11, namely the second temperature is lower than the predetermined temperature, for example, 40°C (No at S102), S102 is performed again (the process returns to S102).

If exhaust heat recovery system 100 determines that the temperature detected by second temperature sensor 11, namely the second temperature is equal to or higher than the predetermined temperature, for example, 40°C (Yes at S102), switching determination unit 20 makes a determination to switch three-way valve 18 (S103). In other words, three-way valve 18 is switched from main path 15 to branched path 16. At this time, operation of cooler 9 is started while operation of hot water supply pump 13 is stopped.

Next, after an elapse of a predetermined period of time, exhaust heat recovery system 100 periodically operates hot water supply pump 13, for example, in a 60-minute cycle (S104, S105).

At S106, exhaust heat recovery system 100 determines whether or not a temperature detected by second temperature sensor 11, namely the second temperature is higher than a predetermined temperature, for example, 35°C. If exhaust heat recovery system 100 determines that the temperature detected by second temperature sensor 11, namely the second temperature is equal to or higher than the predetermined temperature, for example, 35°C (Yes at S106), the process moves to S104.

If exhaust heat recovery system 100 determines that the temperature detected by second temperature sensor 11, namely the second temperature is lower than the predetermined temperature, for example, 35 °C (No at S106), the process moves to S101. In other words, three-way valve 18 is switched from branched path 16 to main path 15. At this time, operation of cooler 9 is stopped while operation of hot water supply pump 13 is started.

Note that, in the present embodiment, the determination is made, based on the temperature detected by second temperature sensor 11, namely the second temperature. However, the determination may be made, based on the temperature detected by first temperature sensor 10, namely the first temperature. For example, if the first temperature varies by a predetermined value or more at S106, the process may move to S101.

### [2-3. Effects]

As described above, in the present embodiment, the exhaust heat recovery system may further include the hot water storage tank in the hot water supply path.

This configuration makes it possible to store warm water in the hot water storage tank, the warm water resulting from heat recovery from the exhaust heat generator. Therefore, even when the exhaust heat recovery system is not operated, warm water stored in the hot water storage tank can be used.

Furthermore, in the present embodiment, the second temperature sensor configured to detect the temperature of supplied hot water flowing through the hot water supply path, namely the second temperature may be provided inside the hot water storage tank.

With this configuration, a temperature inside the hot water storage tank can be directly detected, so that an error in the determination of switching from cogeneration operation to mono-generation operation can be reduced. Thus, the duration of cogeneration operation can be made longer by the reduced error, so that more amount of exhaust heat can be recovered.

Furthermore, in the present embodiment, the flow path switching unit may be a three-way valve.

With this configuration, switching between the main path and the branched path can be smoothly performed. Thus, switching from cogeneration operation to mono-generation operation and switching from mono-generation operation to cogeneration operation can be promptly performed.

### INDUSTRIAL APPLICABILITY

The present invention can enhance the continuity of power generation of the exhaust heat recovery system. Specifically, the present invention is applicable to, for example, home or stationary pure hydrogen fuel cell systems and home cogeneration systems.

### REFERENCE MARKS IN THE DRAWINGS

- 1: exhaust heat Generator
- 2: cooling pump
- 3: cooling path
- 4: first heat exchanger
- 5: intermediate pump
- 6: intermediate path
- 7: first two-way valve
- 8: second two-way valve
- 9: cooler
- 10: first temperature sensor
- 11: second temperature sensor
- 12: second heat exchanger
- 13: hot water supply pump
- 14: hot water supply path
- 15: main path
- 16: branched path
- 17: flow path switching unit
- 18: three-way valve
- 19: hot water storage tank
- 20: switching determination unit
- 100: exhaust heat recovery system

## Claims

1. An exhaust heat recovery system, comprising:
an exhaust heat generator (1);
a cooling path (3) configured to allow cooling water to flow through the cooling path (3), the cooling water being for recovering heat through heat exchange, the heat being generated by the exhaust heat generator (1);
a first heat exchanger (4) disposed in the cooling path (3);
an intermediate path (6) configured to allow a heat medium to flow through the intermediate path (6), the heat medium being subjected to heat exchange with the cooling water by the first heat exchanger (4);
a cooler (9) configured to cool the heat medium flowing through the intermediate path (6); a second heat exchanger (12) disposed in the intermediate path (6);
**characterized in that** the exhaust heat recovery system further comprises:
a flow path switching unit (17) disposed in the intermediate path (6) and configured to switch between a main path (15) and a branched path (16), the main path (15) being configured to allow the heat medium to flow through the main path (15) while causing the heat medium to bypass the cooler (9), the branched path (16) being configured to allow the heat medium to flow through the branched path (16) via the cooler (9);
a hot water supply path (14) configured to allow supplied hot water to flow through the hot water supply path (14), the supplied hot water being subjected to heat exchange with the heat medium by the second heat exchanger (12);
a switching determination unit (20) configured to determine whether to switch the flow path switching unit (17) between the main path (15) and the branched path (16), based on a first temperature or a second temperature, the first temperature being a temperature of the heat medium flowing through the intermediate path (6), the second temperature being a temperature of the supplied hot water flowing through the hot water supply path (14);
a hot water supply pump (13) disposed in the hot water supply path (14) and configured to be controlled, based on the first temperature, to adjust a flow rate of the supplied hot water flowing through the hot water supply path (14); and
a controller,
wherein the controller is configured to, when the first temperature becomes higher than a first predetermined temperature or the second temperature becomes higher than a second predetermined temperature, cause the hot water supply pump (13) to stop, cause the flow path switching unit (17) to switch to the branched path (16), and cause the cooler (9) to operate, and
to cause the hot water supply pump (13) to operate in a predetermined cycle during stop of the hot water supply pump (13) is stopped, and, when, during the operation of the hot water supply pump (13) in the predetermined cycle, the first temperature varies by a predetermined value or more or the second temperature becomes lower than a third predetermined temperature, cause the hot water supply pump (13) to operate, cause the flow path switching unit (17) to switch to the main path (15), and cause the cooler (9) to stop.

2. The exhaust heat recovery system according to claim 1, further comprising at least one of:
a first temperature sensor (10) disposed in the intermediate path (6) and configured to detect the first temperature, the first temperature being the temperature of the heat medium flowing through the intermediate path (6); and
a second temperature sensor (11) disposed in the hot water supply path (14) and configured to detect the second temperature, the second temperature being the temperature of the supplied hot water flowing through the hot water supply path (14).

3. The exhaust heat recovery system according to claim 1 or claim 2, further comprising
a hot water storage tank (19) disposed in the hot water supply path (14).

4. The exhaust heat recovery system according to claim 1, further comprising:
a second temperature sensor (11) disposed in the hot water supply path (14) and configured to detect the second temperature, the second temperature being the temperature of the supplied hot water flowing through the hot water supply path (14); and
a hot water storage tank (19) disposed in the hot water supply path (14);
wherein the second temperature sensor (11) is disposed inside the hot water storage tank (19).

5. The exhaust heat recovery system according to any one of claims 1 to 4,
wherein the flow path switching unit (17) is a three-way valve (18).

6. The exhaust heat recovery system according to any one of claims 1 to 4,
wherein the flow path switching unit (17) includes a first two-way valve (7) disposed in the main path (15).

7. The exhaust heat recovery system according to claim 6,
wherein the flow path switching unit (17) further includes a second two-way valve (8) disposed in the branched path (16).

## Patentansprüche

1. Abwärmerückgewinnungssystem, mit:
einem Abwärmeerzeuger (1);
einem Kühlkanal (3), der ausgebildet ist, Strömen von Kühlwasser durch den Kühlkanal (3) zu ermöglichen, wobei das Kühlwasser dazu dient, durch Wärmeaustausch Wärme zurück zu gewinnen, die von dem Abwärmeerzeuger (1) erzeugt wird:
einem ersten Wärmetauscher (4), der in dem Kühlkanal (3) angeordnet ist;
einem Zwischenkanal (6), der ausgebildet ist, das Strömen eines Wärmemediums durch den Zwischenkanal (6) zu ermöglichen, wobei das Wärmemedium durch den ersten Wärmetauscher (4) einem Wärmeaustausch mit dem Kühlwasser unterzogen wird;
einem Kühler (9), der ausgebildet ist, das durch den Zwischenkanal (6) strömende Wärmemedium zu kühlen;
einem zweiten Wärmetauscher (12), der in dem Zwischenkanal (6) angeordnet ist;
**dadurch gekennzeichnet, dass**
das Abwärmerückgewinnungssystem ferner aufweist:
eine Strömungskanalumschalteinheit (17), die in dem Zwischenkanal (6) angeordnet und ausgebildet ist, zwischen einem Hauptkanal (15) und einem Abzweigkanal (16) umzuschalten, wobei der Hauptkanal (15) ausgebildet ist, das Wärmemedium durch den Hauptkanal (15) strömen zu lassen, während das Wärmemedium den Kühler (9) umgeht, wobei der Abzweigkanal (16) ausgebildet ist, das Wärmemedium durch den Abzweigkanal (16) über den Kühler (9) strömen zu lassen;
einen Warmwasserzuführkanal (14), der ausgebildet ist, zugeführtes Warmwasser durch den Warmwasserzuführkanal (14) strömen zu lassen, wobei das zugeführte Warmwasser einem Wärmeaustausch mit dem Wärmemedium durch den zweiten Wärmetauscher (12) unterzogen wird;
eine Umschaltbestimmungseinheit (20), die ausgebildet ist, auf der Grundlage einer ersten Temperatur oder einer zweiten Temperatur zu bestimmen, ob die Strömungskanalumschalteinheit (17) zwischen dem Hauptkanal (15) und dem Abzweigkanal (16) umzuschalten ist, wobei die erste Temperatur eine Temperatur des Wärmemediums ist, das durch den Zwischenkanal (6) strömt, und die zweite Temperatur eine Temperatur des zugeführten Warmwassers ist, das durch den Warmwasserzuführkanal (14) strömt;
eine Warmwasserzuführpumpe (13), die in dem Warmwasserzuführkanal (14) angeordnet und ausgebildet ist, auf der Grundlage der ersten Temperatur gesteuert zu werden, eine Durchflussrate des durch den Warmwasserzuführkanal (14) strömenden zugeführten Warmwassers einzustellen; und
eine Steuereinheit,
wobei die Steuereinheit ausgebildet ist,
zu bewirken, wenn die erste Temperatur höher als eine erste vorbestimmte Temperatur wird oder die zweite Temperatur höher als eine zweite vorbestimmte Temperatur wird, dass die Warmwasserzuführpumpe (13) stoppt, dass die Strömungskanalumschalteinheit (17) auf den Abzweigkanal (16) umschaltet, und dass der Kühler (9) läuft, und
zu bewirken, dass die Warmwasserzuführpumpe (13) während des Stopps in einem vorbestimmten Zyklus läuft, und wenn während des Betriebs der Warmwasserzuführpumpe (13) in dem vorbestimmten Zyklus die erste Temperatur um einen vorbestimmten Wert oder mehr variiert oder die zweite Temperatur niedriger als eine dritte vorbestimmte Temperatur wird, zu bewirken, dass die Warmwasserzuführpumpe (13) läuft, zu bewirken, dass die Strömungskanalumschalteinheit (17) auf den Hauptkanal (15) umschaltet, und bewirkt, dass der Kühler (9) gestoppt wird.

2. Abwärmerückgewinnungssystem nach Anspruch 1, das ferner aufweist:
einen ersten Temperatursensor (10), der in dem Zwischenkanal (6) angeordnet und ausgebildet ist, die erste Temperatur zu erfassen, wobei die erste Temperatur die Temperatur des Wärmemediums ist, das durch den Zwischenkanal (6) strömt; und/oder
einen zweiten Temperatursensor (11), der in dem Warmwasserzuführkanal (14) angeordnet und ausgebildet ist, die zweite Temperatur zu erfassen, wobei die zweite Temperatur die Temperatur des durch den Warmwasserzuführkanal (14) strömenden Warmwassers ist.

3. Abwärmerückgewinnungssystem nach Anspruch 1 oder Anspruch 2, das ferner einen Warmwasserspeicher (19), der in dem Warmwasserzuführkanal (14) angeordnet ist, aufweist.

4. Abwärmerückgewinnungssystem nach Anspruch 1, das ferner aufweist:
einen zweiten Temperatursensor (11), der in dem Warmwasserzuführkanal (14) angeordnet und ausgebildet ist, die zweite Temperatur zu erfassen, wobei die zweite Temperatur die Temperatur des durch den Warmwasserzuführkanal (14) strömenden zugeführten Warmwassers ist; und
einen Warmwasservorratsbehälter (19), der in dem Warmwasserzuführkanal (14) angeordnet ist;
wobei der zweite Temperatursensor (11) in dem Warmwasservorratsbehälter (19) angeordnet ist.

5. Abwärmerückgewinnungssystem nach einem der Ansprüche 1 bis 4,
wobei die Strömungskanalumschalteinheit (17) ein Dreiwegeventil (18) ist.

6. Abwärmerückgewinnungssystem nach einem der Ansprüche 1 bis 4,
wobei die Strömungskanalumschalteinheit (17) ein erstes Zweiwegeventil (7) aufweist, das in dem Hauptkanal (15) angeordnet ist.

7. Abwärmerückgewinnungssystem nach Anspruch 6,
wobei die Strömungskanalumschalteinheit (17) ferner ein zweites Zweiwegeventil (8) aufweist, das in dem Abzweigkanal (16) angeordnet ist.

## Revendications

1. Système de récupération de chaleur d'échappement, comprenant :
un générateur de chaleur d'échappement (1) ;
un circuit de refroidissement (3) configuré pour permettre à l'eau de refroidissement de circuler à travers le circuit de refroidissement (3), l'eau de refroidissement servant à récupérer la chaleur par échange thermique, la chaleur étant générée par le générateur de chaleur d'échappement (1);
un premier échangeur de chaleur (4) disposé dans le circuit de refroidissement (3);
un circuit intermédiaire (6) configuré pour permettre à un fluide caloporteur de circuler à travers le circuit intermédiaire (6), le fluide caloporteur étant soumis à un échange thermique avec l'eau de refroidissement par le premier échangeur de chaleur (4);
un refroidisseur (9) configuré pour refroidir le fluide caloporteur s'écoulant à travers le circuit intermédiaire (6);
un deuxième échangeur de chaleur (12) disposé dans le circuit intermédiaire (6);
**caractérisé en ce que** le système de récupération de chaleur d'échappement comprend en outre:
une unité de commutation de circuit d'écoulement (17) disposée dans le circuit intermédiaire (6) et configurée pour commuter entre un circuit principal (15) et un circuit dérivé (16), le circuit principal (15) étant configuré pour permettre au fluide caloporteur de s'écouler à travers le circuit principal (15) tout en amenant le fluide caloporteur à contourner le refroidisseur (9), le circuit dérivé (16) étant configuré pour permettre au fluide caloporteur de s'écouler à travers le circuit dérivé (16) via le refroidisseur (9);
un circuit d'alimentation en eau chaude (14) configuré pour permettre à l'eau chaude fournie de s'écouler à travers le circuit d'alimentation en eau chaude (14), l'eau chaude fournie étant soumise à un échange thermique avec le fluide caloporteur par le deuxième échangeur de chaleur (12) ;
une unité de détermination de commutation (20) configurée pour déterminer s'il faut commuter l'unité de commutation de circuit d'écoulement (17) entre le circuit principal (15) et le circuit dérivé (16), sur la base d'une première température ou d'une deuxième température, la première température étant une température du fluide caloporteur s'écoulant à travers le circuit intermédiaire (6), la deuxième température étant une température de l'eau chaude fournie s'écoulant à travers le circuit d'alimentation en eau chaude (14);
une pompe d'alimentation en eau chaude (13) disposée dans le circuit d'alimentation en eau chaude (14) et configurée pour être commandée, sur la base de la première température, afin d'ajuster un débit de l'eau chaude s'écoulant à travers le circuit d'alimentation en eau chaude (14); et
un dispositif de commande,
dans lequel le dispositif de commande est configuré pour, lorsque la première température devient supérieure à une première température prédéterminée ou lorsque la deuxième température devient supérieure à une deuxième température prédéterminée, provoquer l'arrêt de la pompe d'alimentation en eau chaude (13), provoquer le passage de l'unité de commutation de circuit d'écoulement (17) au circuit ramifié (16) et provoquer le fonctionnement du refroidisseur (9), et
pour faire fonctionner la pompe d'alimentation en eau chaude (13) selon un cycle prédéterminé pendant l'arrêt de la pompe d'alimentation en eau chaude (13), et, lorsque, pendant le fonctionnement de la pompe d'alimentation en eau chaude (13) selon le cycle prédéterminé, la première température varie d'une valeur prédéterminée ou plus ou la deuxième température devient inférieure à une troisième température prédéterminée, faire fonctionner la pompe d'alimentation en eau chaude (13), faire passer l'unité de commutation de circuit d'écoulement (17) au circuit principal (15) et arrêter le refroidisseur (9).

2. Système de récupération de chaleur d'échappement selon la revendication 1, comprenant en outre au moins l'un des éléments suivants :
un premier capteur de température (10) disposé dans le circuit intermédiaire (6) et configuré pour détecter la première température, la première température étant la température du fluide caloporteur s'écoulant à travers le circuit intermédiaire (6) ; et
un deuxième capteur de température (11) disposé dans le circuit d'alimentation en eau chaude (14) et configuré pour détecter la deuxième température, la deuxième température étant la température de l'eau chaude fournie circulant dans le circuit d'alimentation en eau chaude (14).

3. Système de récupération de chaleur d'échappement selon la revendication 1 ou la revendication 2, comprenant en outre
un réservoir de stockage d'eau chaude (19) disposé dans le circuit d'alimentation en eau chaude (14).

4. Système de récupération de chaleur d'échappement selon la revendication 1, comprenant en outre :
un deuxième capteur de température (11) disposé dans le circuit d'alimentation en eau chaude (14) et configuré pour détecter la deuxième température, la deuxième température étant la température de l'eau chaude fournie circulant dans le circuit d'alimentation en eau chaude (14) ; et
un réservoir de stockage d'eau chaude (19) disposé dans le circuit d'alimentation en eau chaude (14) ;
dans lequel le deuxième capteur de température (11) est disposé à l'intérieur du réservoir de stockage d'eau chaude (19).

5. Système de récupération de chaleur d'échappement selon l'une quelconque des revendications 1 à 4, dans lequel l'unité de commutation de circuit d'écoulement (17) est une vanne à trois voies (18).

6. Système de récupération de chaleur d'échappement selon l'une quelconque des revendications 1 à 4, dans lequel l'unité de commutation de circuit d'écoulement (17) comprend une première vanne à deux voies (7) disposée dans le circuit principal (15).

7. Système de récupération de chaleur d'échappement selon la revendication 6, dans lequel l'unité de commutation de circuit d'écoulement (17) comprend en outre une deuxième vanne à deux voies (8) disposée dans le circuit dérivé (16).
